# EUROPEAN PATENT SPECIFICATION

(11) **EP 1 469 546 B1**
(45) Date of publication and mention of the grant of the patent: **31.07.2013**
(21) Application number: 04005638.4
(22) Date of filing: 10.03.2004
(51) Int. Cl.: H01M 8/10, H01M 8/06

(54) **Fuel cell system and related method**
Brennstofzellensystem und zugehöriges Verfahren
Système de pile à combustible et méthode appartenant à celui-ci

(30) Priority: 11.03.2003 JP 2003064942
(43) Date of publication of application: 20.10.2004
(73) Proprietor: Renault s.a.s. société par actions simplifiée, 92100 Boulogne-Billancourt (FR); NISSAN MOTOR CO., LTD., Yokohama-shi Kanagawa-ken (JP)
(72) Inventor: Rouveyre, Luc, Yokohama-shi, Kanagawa-ken (JP); Makino, Shinichi, Yokosuka-shi, Kanagawa-ken (JP)
(74) Representative: Grünecker, Kinkeldey, Stockmair & Schwanhäusser

(56) References cited:
- EP-A- 1 182 720
- EP-A- 1 276 163
- WO-A-99/05741
- US-A1- 2001 021 468
- US-A1- 2002 041 989
- US-A1- 2002 098 395
- US-A1- 2003 012 993

## Description

The present invention relates to a fuel cell system according to the preamble of independent claim 1 and a method of humidifying a fuel cell system according to the preamble of independent claim 13.

Such a fuel cell system and such a method for humidifying a fuel cell system can be taken from the prior art document EP 1 182 720 A1. Said prior art fuel cell system comprises a first humidification section on the hydrogen electrode exhaust gas line to transfer water vapour to the air supply side and a second humidification section which transfers water vapour to the fuel supply side. Hence, the air supply side and the fuel supply side are provided with individual and independent humidification sections so that water vapour which is separately exhausted from the fuel cell is separately transferred back for separate humidification on the respective supply sides.

A fuel cell serves to electrically react fuel gas, such as hydrogen gas, and oxidizer gas, such as air containing oxygen, by means of an electrolyte for directly taking out electrical energy via electrodes formed on both surfaces of the electrolyte.

Especially, a polymer electrolyte fuel cell (PEFC) employing a solid polymer electrolyte has been attracting public attention as a power source of an electric vehicle because of a low operating temperature and ease of handling. That is, a fuel cell powered vehicle employing the fuel cell as the power source is a so-called ultimate clean vehicle with a structure on which a hydrogen storage device, such as a high-pressure hydrogen tank, a liquid hydrogen tank and a hydrogen absorbing alloy tank, is installed to allow hydrogen to be supplied to the fuel cell, to which air, containing oxygen, is also supplied, for reaction to extract electric energy by which a motor connected to drive wheels is driven, with only water being exhausted as emission matter.

Due to an inability of exhibiting adequate ion conductivity unless a polymer electrolyte membrane interleaved between a cathode and an anode is maintained at an appropriate wet condition, the polymer electrolyte fuel cell includes a humidifying system.

Japanese Patent Application Laid-Open Publication No. 2000-357529 discloses, in FIG. 1 and its corresponding description on page 4, a polymer electrolyte fuel cell system equipped with a humidifying system. The polymer electrolyte fuel cell system has a structure in which steam, present in exhaust hydrogen expelled from an anode, is collected by a gas-liquid separator and reused as humidifying water.

However, upon studies conducted by the present inventors, when moisture in exhaust hydrogen is to be condensed using a condenser, there is a need for heat of condensation to be radiated to the outside of the system using such as a radiator, that is, there is a need for a heat radiating performance of a cooling system to be improved, tending to increase weights of cooling equipments as a result of increased sizes of such as a radiator and a coolant pump.

Further, in order to increase a cooling capacity of such a cooling system, the flow rate per se of coolant needs to be increased.

Moreover, applying such a cooling system to the fuel cell powered vehicle also results in a tendency of a drop in a fuel saving performance due to its increased weight.

It is an object of the present invention to provide a fuel cell system as indicated above as well as a method of humidifying a fuel cell system as indicated above wherein operation performance of the related fuel cell can be improved.

According to the present invention, said objective is solved by a fuel cell system having the features of independent claim 1. Preferred embodiments are laid down in the dependent claims.

Moreover, according to the method aspect of the present invention, said objective is also solved by a method of humidifying a fuel cell system according to the independent claim 13.

Other and further features, advantages, and benefits of the present invention will become more apparent from the following description taken in conjunction with the following drawings.

### BRIEF DESCRIPTION OF THE DRAWINGS

FIG. 1 is a system structural view illustrating a structure of a fuel cell system of a first embodiment. Said embodiment does not illustrate the subject matter of the independent claims;
FIG. 2 is a schematic view typically illustrating a structure of a first steam permeating type humidifier for use in the presently filed embodiment;
FIG. 3 is a system structural view illustrating a structure of a modified form of the fuel cell system of the presently filed embodiment;
FIG. 4 is a system structural view illustrating a structure of a fuel cell system of a second embodiment according to the present invention;
FIG. 5 is a schematic view typically illustrating a structure of a second steam permeating type humidifier for use in the presently filed embodiment;
FIG. 6 is a system structural view illustrating a structure of a fuel cell system of a third embodiment according to the present invention;
FIG. **7** is a system structural view illustrating a structure of a fuel cell system of a **fourth** embodiment according to the present invention;
FIG. **8** is a system structural view illustrating a structure of a fuel cell system of a **fifth** embodiment according to the present invention;
FIG. **9** is a system structural view illustrating a structure of a fuel cell system of an **sixth** embodiment according to the present invention; and
FIG. **10** is a schematic view typically illustrating a structure of an integrated steam permeating type humidifier for use in the presently filed embodiment.

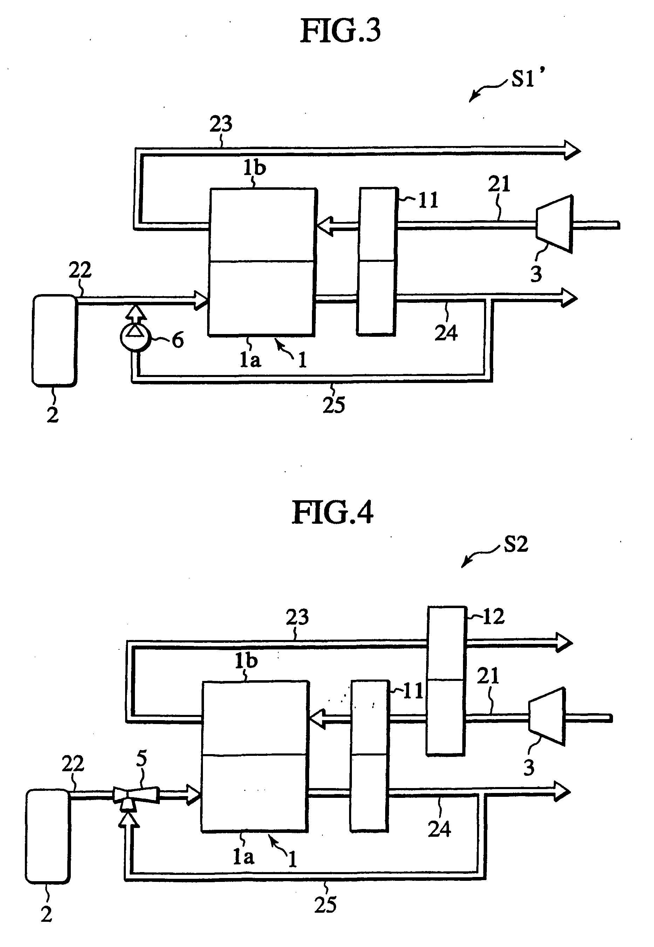

Hereinafter, a fuel cell system and its related method of embodiments according to the present invention are described with reference to FIGS. **4** to **10** of the accompanying drawings.

### (First Embodiment)

First, a fuel cell system and its related method of a first embodiment are described with reference to FIG.S. 1 to 3. Said embodiment does not illustrate the subject matter of the independent claims.

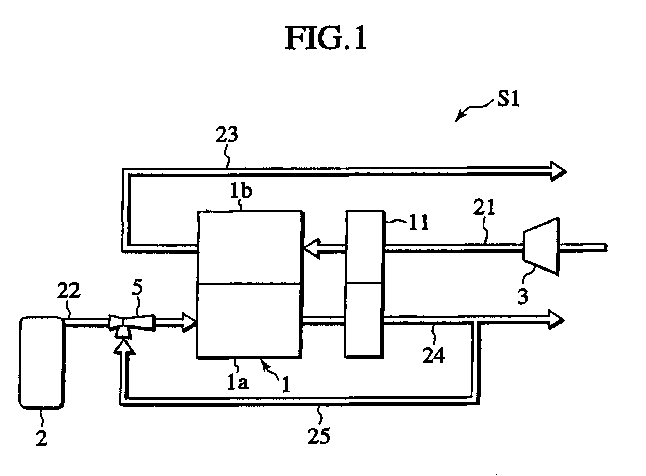

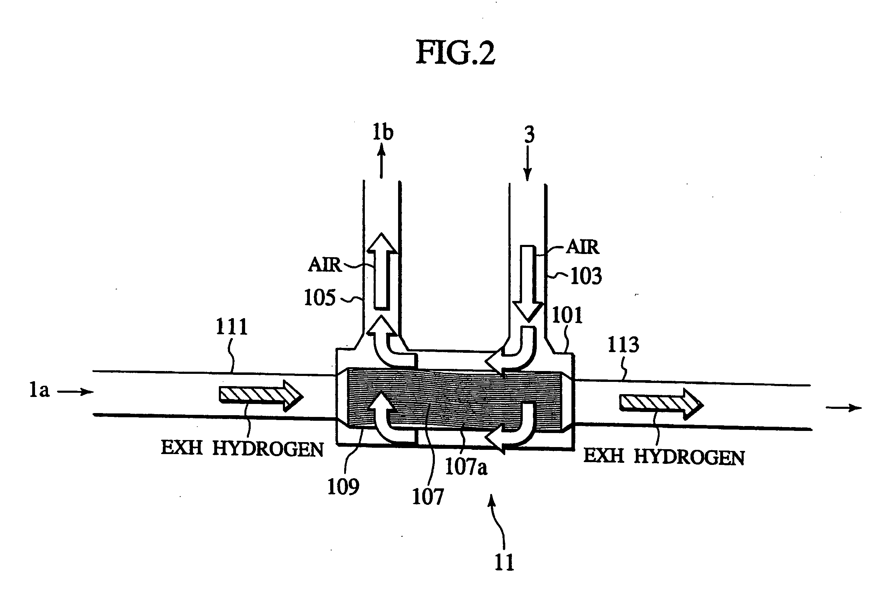

FIG. 1 is a system structural view illustrating a structure of a fuel cell system of the presently filed embodiment; FIG. 2 is a schematic view typically illustrating a structure of a first steam permeating type humidifier for use in the presently filed embodiment; and FIG. 3 is a system structural view illustrating a structure of a modified form of the fuel cell system of the presently filed embodiment. Also, though not particular limitation is intended, the fuel cell system of the presently filed embodiment has a structure particularly suited for use in a fuel cell powered vehicle that uses hydrogen gas as fuel.

As shown in FIG. 1, the fuel cell system S1 is comprised with a fuel cell (fuel cell main body) 1 that has a fuel electrode (anode) 1a and an air electrode (cathode) 1b, between which electrolyte typically such as solid polymer electrolyte (not shown) is provided, a hydrogen supply section 2 that serves as fuel gas supplying means such as a fuel tank by which fuel gas is fed to the fuel electrode 1a, an air supply section 3 that serves as air supplying means such as an air compressor by which air is fed to the air electrode 1b, an air supply passage 21 by which the air supply section 3 and the air electrode 1b are connected, a hydrogen supply passage 22 by which the hydrogen supply section 2 and the fuel electrode 1a are connected, an air exhaust passage 23 through which air is exhausted from the air electrode 1b, a hydrogen exhaust passage 24 through which hydrogen gas is exhausted from the fuel electrode 1a, a hydrogen recirculation path 25 through which exhaust hydrogen in the hydrogen exhaust passage 24 is returned to the hydrogen supply passage 22, an ejector 5 that serves as recirculating means to operate, on a drive source provided by flesh flow of hydrogen gas supplied from the hydrogen supply section 2, for recirculating the exhaust hydrogen via the hydrogen recirculation path 25, and a first steam permeating type humidifier 11 disposed between the hydrogen exhaust passage 24 and the air supply passage 21 to transfer moisture from the hydrogen exhaust passage 24 to air passing through the air supply passage 21.

As shown in FIG. 2, the first steam permeating type humidifier 11 is structured so as to allow an air inlet conduit 103, forming a portion of the air supply passage 21 connected to the air supply section 3, and an air outlet conduit 105, forming a portion of the air supply passage 21 connected to the air electrode 1b, to communicate with a housing 101 such that air to be fed to the air electrode 1b through the air supply passage 21 is admitted in the housing 101 from the right to the left in the figure.

Further, disposed in the first steam permeating type humidifier 11 is a humidifying module 109 that extends and penetrates through the housing 101. The humidifying module 109 is comprised with an exhaust gas inlet conduit 111, forming a portion of the hydrogen exhaust passage 24 connected to the fuel electrode 1a, through which hydrogen gas (called as exhaust hydrogen gas or merely called as hydrogen gas) exhausted from the fuel electrode 1a is introduced, an exhaust gas outlet conduit 113, forming a portion of the hydrogen exhaust passage 24 on a further downstream side, through which exhaust gas is expelled, and a hollow fiber membrane body 107 extending between the exhaust gas inlet conduit 111 and the exhaust gas outlet conduit 113 and including a bunch of a large number of hollow fiber membranes 107a whose surfaces are exposed to the interior of the housing 101 and which are formed with hollow fibers. The hollow fibers of the hollow fiber membrane 107a may typically be made of a polyamide family.

With such a first steam permeating type humidifier 11, when moisture, that is, exhaust gas containing moisture such as steam, is introduced from the exhaust gas inlet conduit 111, connected to one end of the hollow fiber membrane body 107 of the humidifying module 109 in the housing 101, to a left end portion of the hollow fiber membrane body 107, steam disperses over surfaces of respective hollow fiber membranes 107a as such a stream of exhaust gas flows from the left to the right in FIG. 2. In the meantime, a stream of air is introduced to the housing 101 through the air inlet conduit 103 and then passes across the outside of the humidifying module 109 in the housing 101 from the left to the right in the figure. When this takes place, steam dispersed over the surfaces of the hollow fiber membranes 107a is included into air, which in turn is humidified.

That is, with the fuel cell system as a whole, a stream of hydrogen supplied from the hydrogen supply section 2 and a stream of recirculated hydrogen recirculated by the ejector 5 mix with one another and then are supplied to the fuel electrode 1a of the fuel cell 1 for use in generating electric power through electrochemical reaction. Excessive hydrogen that has not been consumed in electrochemical reaction in the fuel electrode 1a passes through the hydrogen exhaust passage 24 and introduced into the first steam permeating type humidifier 11. Here, such a stream of hydrogen is enabled to contain moisture that, due to so-called reverse dispersion, has transferred from the air electrode 1b to the fuel electrode 1a in the fuel cell 1 and, when this occurs, moisture contained in the stream of exhaust hydrogen introduced to the first steam permeating type humidifier 11 is transferred to the stream of air (supplied air) fed to the first steam permeating type humidifier 11 from the air supply section 3. Then, air that is humidified with the first steam permeating type humidifier 11 is introduced to the air electrode 1b of the fuel cell 1, and after oxygen has been consumed in electrochemical reaction, air is exhausted to the outside through the air exhaust passage 23.

Incidentally, although there is described hereinbefore that exhaust gas, which serves as humidifying gas, passes inside the hollow fiber membranes 107a of the hollow fiber membrane body 107 and air, which is to be humidified, passes outside the hollow fiber membranes 107a of the hollow fiber membrane body 107, no limitation is intended to such a structure, of course, and an alternative structure in which the exhaust gas passes outside the hollow fiber membranes 107a of the hollow fiber membrane body 107 and the air passes inside the hollow fiber membranes 107a of the hollow fiber membrane body 107 can be adapted.

As set forth above, according to the structure of the presently filed embodiment, moisture that has been reversely dispersed from the air electrode 1b to the fuel electrode 1a inside of the fuel cell 1 can be returned to the stream of air to be supplied from the stream of exhaust hydrogen using the first steam permeating type humidifier 11.

For this reason, the structure of the presently filed embodiment is able to have advantageous effects described below.

Initially, the moisture content that would accumulate in a closed fuel gas supply loop, involving the fuel electrode and the hydrogen recirculation path, can be minimized, enabling reduction in the amount of condensed water. This leads to a capability of suppressing water from clogging up inside of the fuel cell.

Also, no need arises in using a condenser with no occurrence of heat of condensation, enabling miniaturization in size of a radiator, which is not shown, for cooling the fuel cell while enabling the flow rate of coolant to be reduced. Also, even when in use of the condenser, the condenser may be sufficed to have a minimized size.

Further, while it is conceivable to take a structure for reserving pure water in a separate stock, with a view to humidifying air, and incorporating a humidifier for such a purpose, the presently filed embodiment has a capability of effectively utilizing the moisture content in the stream of anode exhaust gas (exhaust hydrogen), making it possible to minimize the amount of pure water to be stored or to allow pure water to be dispensed with.

Furthermore, because the stream of non-reacted exhaust hydrogen gas can be reused, a utilization efficiency of fuel gas can be improved.

Moreover, due to a capability of using the ejector to convert a momentum of the stream of supplied fuel gas fed from the fuel supply section into a momentum of a stream of recirculated hydrogen, the stream of hydrogen can be recirculated with no work being applied from the outside.

Also, the transfer of moisture allows a mass of exhaust fuel gas to be reduced, providing ease of recirculating exhaust hydrogen gas.

Additionally, a modified form of the presently filed embodiment may include a fuel cell system S1', as shown in FIG. 3, which includes a recirculation unit for recirculating the stream of fuel gas using a pump 6 in place of the ejector 5.

With such a structure, although there is a need for applying work to the pump 6 from outside as a drive force to drive the same for recirculating hydrogen, since adjusting the rotational speed of the pump 6 enables adjustment of the amount of hydrogen to be recirculated regardless of the amount of supplied hydrogen, an advantageous merit includes a capability of achieving an arbitrary stoichiometric ratio (hydrogen excess rate).

### (Second Embodiment)

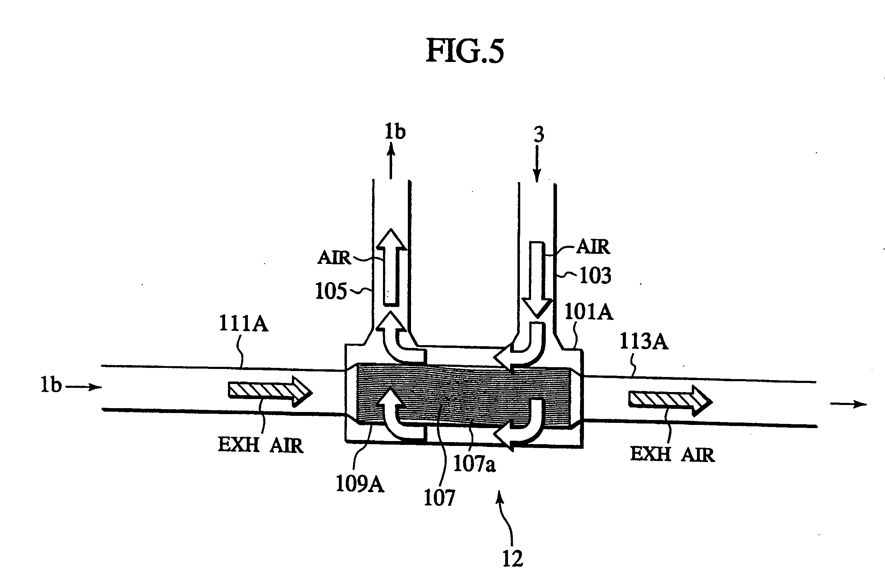

Next, a fuel cell system and its related method of a second embodiment according to the present invention are described with reference to FIGS. 4 and 5.

FIG. 4 is a system structural view illustrating a structure of a fuel cell system of the presently filed embodiment, and FIG. 5 is a schematic view typically illustrating a structure of a second steam permeating type humidifier for use in the presently filed embodiment.

As shown in FIG. 4, the structure of the fuel cell system S2 of the presently filed embodiment differs from the structure of the first embodiment in that in addition to the first steam permeating type humidifier 11, a second steam permeating type humidifier 12 is connected between the air exhaust passage 23 and the air supply passage 21 to transfer moisture from the air exhaust passage 23 to the air supply passage 21. Other structure is similar to the first embodiment, and the same component parts as those of the first embodiment bear the same reference numerals to omit or simplify redundant description.

As shown in FIG. 5, the second steam permeating type humidifier 12 fundamentally has the same structure as that of the first steam permeating type humidifier 11 and is structured so as to allow the air inlet conduit 103, forming a portion of the air supply passage 21 connected to the air supply section 3, and the air outlet conduit 105, forming a portion of the air supply passage 21 connected to the air electrode 1b to communicate with a housing 101A such that air to be fed to the air electrode 1b through the air supply passage 21 is admitted in the housing 101A from the right to the left in the figure.

Further, disposed in the second steam permeating type humidifier 12 is a humidifying module 109A that extends and penetrates through the housing 101A. The humidifying module 109A is comprised with an exhaust gas inlet conduit 111A, forming a portion of the air exhaust passage 23 connected to the air electrode 1b, through which air (called as exhaust air or merely called as exhaust gas) exhausted from the air electrode 1b is introduced, an exhaust gas outlet conduit 113A, forming a portion of the air exhaust passage 23 on a further downstream side, through which exhaust gas is expelled, and the hollow fiber membrane body 107 extending between the exhaust gas inlet conduit 111A and the exhaust gas outlet conduit 113A and including a bunch of a large number of hollow fiber membranes 107a whose surfaces are exposed to the interior of the housing 101A.

With such a second steam permeating type humidifier 12, when moisture, that is, exhaust gas containing moisture such as steam, is introduced from the exhaust gas inlet conduit 111A, connected to one end of the hollow fiber membrane body 107 of the humidifying module 109A in the housing 101A, to a left end portion of the hollow fiber membrane body 107, steam disperses over surfaces of respective hollow fiber membranes 107a as such a stream of exhaust gas flows from the left to the right in FIG. 5. In the meantime, a stream of air is introduced to the housing 101A through the air inlet conduit 103 and then passes the housing 101A from the right to the left in the figure and delivered out of the air outlet conduit 105. When this takes place, steam dispersed over the surfaces of the hollow fiber membranes 107a is included into air, which in turn is humidified.

That is, with the fuel cell system as a whole, air thus humidified air is fed to the air electrode 1b of the fuel cell 1 for use in electric power generation through electrochemical reaction. More specifically, excessive air that has not been consumed in electrochemical reaction in the air electrode 1b passes through the air exhaust passage 23 and introduced into the second steam permeating type humidifier 12. Then, air that is humidified with the second steam permeating type humidifier 12 is introduced to the air electrode 1b of the fuel cell 1, and after oxygen contained in such humidified air has been consumed in electrochemical reaction, air is introduced into the second steam permeating type humidifier 12 and then exhausted to the outside through the air exhaust passage 23.

Incidentally, in this embodiment, too, although there is described hereinbefore that exhaust gas, which serves as humidifying gas, passes inside the hollow fiber membranes 107a of the hollow fiber membrane body 107 and air, which is to be humidified, passes outside the hollow fiber membranes 107a of the hollow fiber membrane body 107, no limitation is intended to such a structure, and an alternative structure in which the exhaust gas passes outside the hollow fiber membranes 107a of the hollow fiber membrane body 107 and the air flows inside the hollow fiber membranes 107a of the hollow fiber membrane body 107 can be equipped.

With the structure of the presently filed embodiment set forth above, the presence of the second steam permeating type humidifier 12 disposed between the air exhaust passage 23 and the air supply passage 21 enables moisture contained in the stream of exhaust air to be transferred to and humidify air to be supplied, and the amount of moisture to be drawn to the outside can be eliminated to avoid a water balance from being deteriorated in a minus.

Further, the second steam permeating type humidifier 12 is located between the first steam permeating type humidifier 11 and the air supply section 3, that is, at a position upstream of the first steam permeating type humidifier 11 with respect to the air supply passage 21.

Accordingly, since the amount of moisture in supplied air being introduced to the first steam permeating type humidifier 11 has already increased, due to the presence of moisture transferred from exhaust air, partial pressure difference in steam between the humidifying side and the side to be humidified decreases, resulting in reduction in the amount of moisture to be transferred from the anode side to the cathode side. For this reason, no probability occurs in which excessive amount of moisture is transferred from the recirculation path associated with the anode side, enabling the anode to be protected from so-called drying-out state.

### (Third Embodiment)

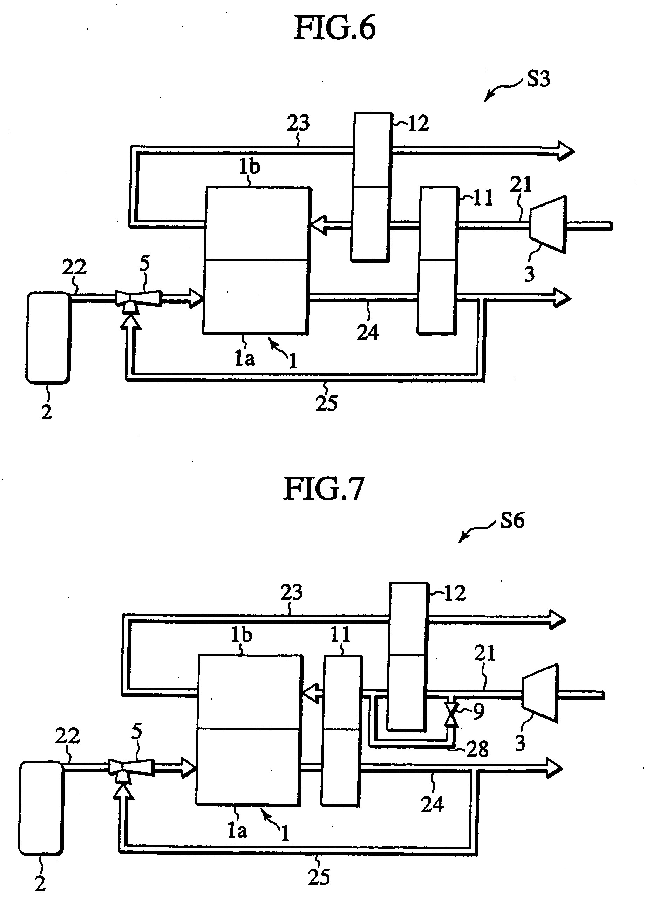

Next, a fuel cell system and its related method of a third embodiment according to the present invention are described with reference to FIG. 6.

FIG. 6 is a system structural view illustrating a structure of a fuel cell system of the presently filed embodiment.

As shown in FIG. 6, the structure of the fuel cell system S3 of the presently filed embodiment differs from the structures of the first and second embodiments in that the second steam permeating type humidifier 12, described in the second embodiment, is located between the air exhaust passage 23 and the air supply passage 21 downstream of the air supply passage 21 with respect to the first steam permeating type humidifier 11, described in the first embodiment, to allow moisture to be transferred from the air exhaust passage 23 to the stream of air passing through the air supply passage 21. Other structure is similar to those of the first and second embodiments, and the same component parts as those of the first and second embodiments bear the same reference numerals to omit or simplify redundant description.

That is, in the presently filed embodiment, the second steam permeating type humidifier 12 is disposed between the first steam permeating type humidifier 11 and the fuel cell 1, that is, at a position downstream of the first steam permeating type humidifier 11 with respect to the air supply passage 21.

Accordingly, since the amount of moisture, contained in supplied air to be introduced to the first steam permeating type humidifier 11, remains less in value, a partial pressure difference in steam between the humidifying side and the side to be humidified increases, resulting in an increase in the amount of moisture to be transferred from the anode to the cathode.

For this reason, since a further increased ratio of moisture can be collected from the recirculation path of the anode, the amount of moisture to be condensed in the closed loop can be minimized, resulting in an increase in a water jamming removal efficiency.

### (Fourth Embodiment)

Next, a fuel cell system and its related method of a **fourth** embodiment according to the present invention are described with reference to FIG. **7**.

FIG. **7** is a system structural view illustrating a structure of a fuel cell system of the presently filed embodiment.

As shown in FIG. **7** , the structure of the fuel cell system S6 of the presently filed embodiment differs from the structure of the second embodiment in that the air supply passage 21, described in the second embodiment, is additionally provided with a bypass passage 28 by which the second steam permeating type humidifier 12 is bypassed and in which a valve 9 is disposed for adjusting the flow rate of air to be introduced into the bypass passage 28. Other structure is similar to that of the first embodiment, and the same component parts as those of the first embodiment bear the same reference numerals to omit or simplify redundant description.

That is, with the presently filed embodiment, when the valve 9 is open, the air supply passage 21 bypasses the second steam permeating type humidifier 12 via the bypass passage 28.

Such a structure is so arranged as to address a probability in that when the amount of moisture to be discharged to the outside due to exhaust air expelled from the air electrode 1b of the fuel cell decreases below the amount of moisture to be formed on chemical reaction, moisture progressively accumulates inside of the fuel cell system and moisture is apt to be condensed.

Consequently, when desired to increase the amount of moisture to be discharged with exhaust air, opening the valve 9 allows supplied air with a low humidified degree i.e., a dried condition to bypass the second steam permeating type humidifier 12, thereby enabling reduction in the amount of moisture to be transferred from exhaust air to supplied air.

Incidentally, the valve 9 may be of a variable type. In such case, adjusting the opening of the valve 9 enables adjustment of the flow rate of supplied air being bypassed, thereby enabling adjustment of the amount of moisture to be transferred from the air exhaust passage 23 to the air supply passage 21 at an arbitrary rate.

### (Fifth Embodiment)

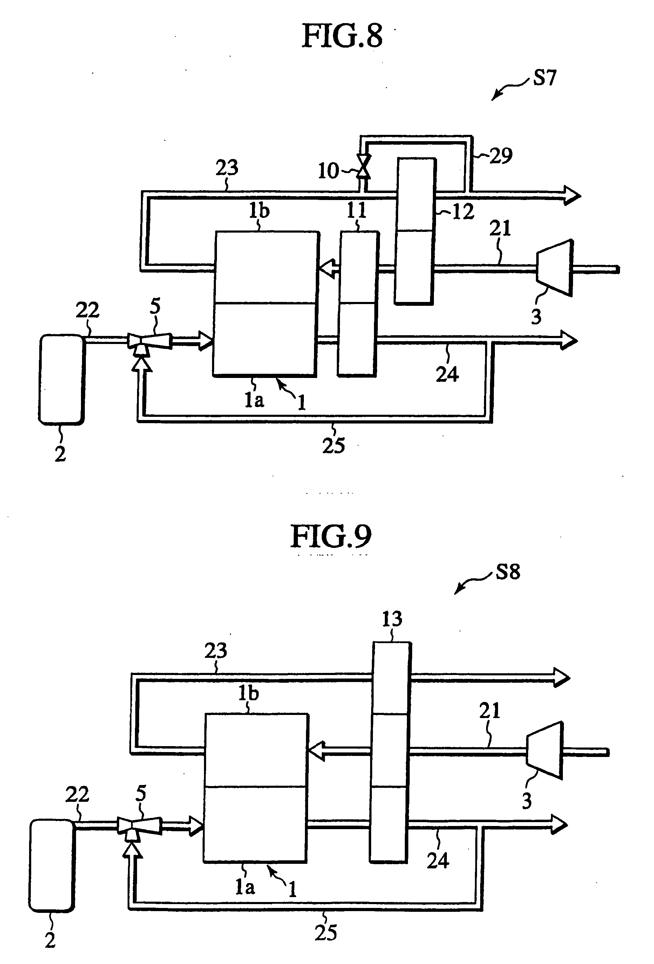

Next, a fuel cell system and its related method of a **fifth** embodiment according to the present invention are described with reference to FIG. **8**.

FIG. **8** is a system structural view illustrating a structure of a fuel cell system of the presently filed embodiment.

As shown in FIG. **8**, the structure of the fuel cell system S7 of the presently filed embodiment differs from the structure of the second embodiment in that the air exhaust passage 23, described in the second embodiment, is additionally provided with a bypass passage 29 by which the second steam permeating type humidifier 12 is bypassed and in which a valve 10 is disposed for adjusting the flow rate of exhaust air to be introduced into the bypass passage 29. Other structure is similar to that of the first embodiment, and the same component parts as those of the second embodiment bear the same reference numerals to omit or simplify redundant description.

That is, with the presently filed embodiment, when the valve 10 is open, the air exhaust passage 23 bypasses the second steam permeating type humidifier 12 via the bypass passage 29.

Such a structure is so arranged as to address a probability in that when the amount of moisture to be discharged to the outside due to exhaust air expelled from the air electrode 1b of the fuel cell decreases below the amount of moisture to be formed during electrochemical reaction occurring inside of the fuel cell 1, moisture progressively accumulates inside of the fuel cell system and moisture is apt to be condensed.

Consequently, when desired to increase the amount of moisture to be discharged with exhaust air, opening the valve 10 allows exhaust air, containing moisture, not to flow into the second steam permeating type humidifier 12 at a full flow rate, thereby enabling reduction in the amount of moisture to be transferred from exhaust air to supplied air.

Incidentally, the valve 10 may be of a variable type. In such case, adjusting the opening of the valve 10 enables adjustment of the flow rate of exhaust air being bypassed, thereby enabling adjustment of the amount of moisture to be transferred from the air exhaust passage 23 to the air supply passage 21 at an arbitrary rate.

### (Sixth Embodiment)

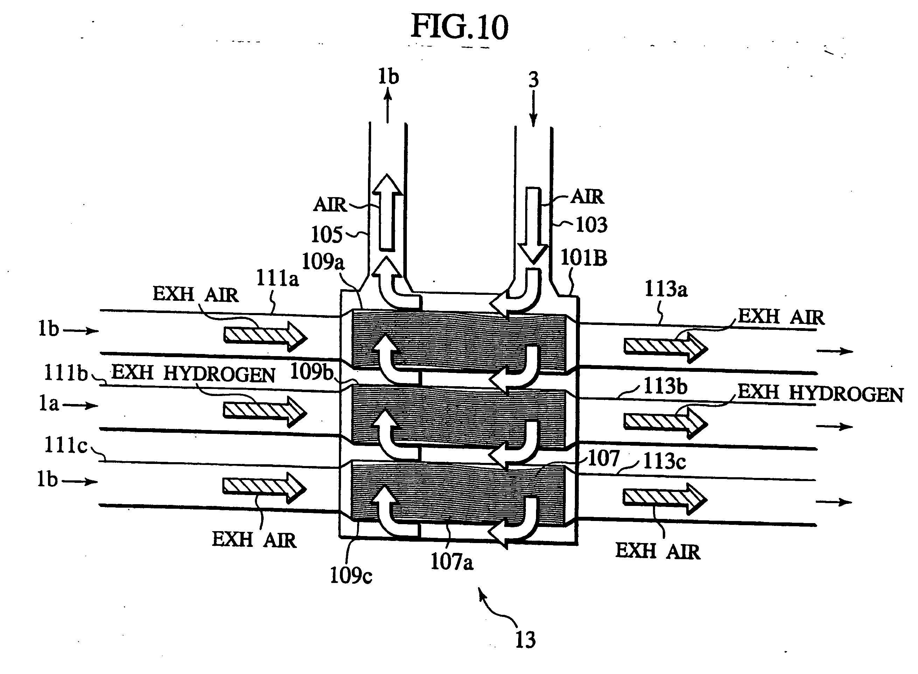

Next, a fuel cell system and its related method of a **sixth** embodiment according to the present invention are described with reference to FIGS. **9** and **10****.**

FIG. **9** is a system structural view illustrating a structure of a fuel cell system of the presently filed embodiment, and FIG. **10** is a schematic view typically illustrating a structure of an integrated steam permeating type humidifier for use in the presently filed embodiment.

As shown in FIG. **9**, the structure of the fuel cell system S8 of the presently filed embodiment differs from the structure of the second embodiment in that the integrated steam permeating type humidifier 13 is employed and the integrated steam permeating type humidifier 13 incorporates the first steam permeating type humidifier 11, permitting air in the air supply passage 21 to be humidified with moisture present in the hydrogen exhaust passage 24, and the second steam permeating type humidifier 12, permitting air in the air supply passage 21 to be humidified with moisture present in the air exhaust passage 23, such that the first steam permeating type humidifier 11 and the second steam permeating type humidifier 12 are disposed in parallel with respect to the air supply passage 21 and formed in an integral structure. Other structure is similar to that of the second embodiment, and the same component parts as those of the second embodiment bear the same reference numerals to omit or simplify redundant description.

As shown in FIG. **10**, the integrated steam permeating type humidifier 13 is structured so as to allow the air inlet conduit 103, forming a portion of the air supply passage 21 connected to the air supply section 3, and the air outlet conduit 105, forming a portion of the air supply passage 21 connected to the air electrode 1b to communicate with a housing 101B such that the air to be fed to the air electrode 1b through the air supply passage 21 is admitted in the housing 101B from the right to the left in the figure.

Further, disposed in the integrated steam permeating type humidifier 13 are three humidifying modules 109a, 109b, 109c that extend and penetrate through the housing 101B. The humidifying module 109a is comprised with an inlet conduit 111a, forming a portion of the air exhaust passage 23 connected to the air electrode 1b, through which exhaust air is introduced, and an outlet conduit 113a, forming a portion of the air exhaust passage 23 on a further downstream side, through which exhaust air is expelled. The humidifying module 109b is comprised with an inlet conduit 111b, forming a portion of the hydrogen exhaust passage 24 connected to the fuel electrode 1a, through which exhaust hydrogen is introduced, and an outlet conduit 113b, forming a portion of the hydrogen exhaust passage 24 on a further downstream side, through which exhaust hydrogen is expelled. The humidifying module 109c is comprised with an exhaust gas inlet conduit 111c, forming a portion of the air exhaust passage 23 connected to the air electrode 1b, through which exhaust air is introduced, and an outlet conduit 113c, forming a portion of the air exhaust passage 23 on a further downstream side, through which exhaust air is expelled. Incidentally, the inlet conduit 11a and the inlet conduit 11c through which exhaust air is introduced are diverged from the air exhaust passage 23 upstream of the integrated steam permeating type humidifier 13, and the outlet conduit 113c and the outlet conduit 113c through which exhaust air is expelled merges into an air exhaust passage 23 downstream of the integrated steam permeating type humidifier 13. Also, each of the humidifying modules 109a, 109b, 109c is provided with a hollow fiber membrane body 107 that includes a bunch of hollow fiber membranes 107a.

With such a structure, exhaust air containing steam is introduced to left ends of the hollow fiber membrane bodies 107 of the humidifying modules 109a, 109c through the inlet conduits 11a, 11c connected to one end of the hollow fiber membrane bodies 107, respectively, and as exhaust air flows through the interior of the hollow fiber membrane bodies 107 from the left to the right in FIG. **10**, steam disperses from the surfaces of the hollow fiber membranes 107a whereupon steam is transferred to supplied air which is consequently humidified. Likewise, exhaust hydrogen containing moisture is introduced to the left end of the hollow fiber membrane body 107 of the humidifying module 109b through the inlet conduit 11b, and as exhaust hydrogen flows through the interior of the hollow fiber membrane body 107 from the left to the right in FIG. **10**, steam disperses from the surface of the hollow fiber membrane 107a whereupon steam is transferred to supplied air and supplied air is humidified.

With the structure of the presently filed embodiment set forth above, since the integrated steam permeating type humidifier 13 is adopted, a cross sectional area of a passage through which supplied air flows becomes greater, i.e., in a low flow speed than that of a structure wherein the first steam permeating type humidifier 11, which permits moisture present in the exhaust hydrogen passage 24 to be supplied to the air flowing through the air supply passage 21 to humidify the same, and the second steam permeating type humidifier 12, which permits moisture present in the air exhaust passage 23 to be supplied to the air flowing through the air supply passage 21 to humidify the same, are individually disposed in series, enabling reduction in pressure loss of supplied air. Thus, the air supply section, that is, the compressor is able to have a decreased compression ratio, enabling reduction in electric power consumed for driving the compressor.

Incidentally, while the integrated steam permeating type humidifier of the presently filed embodiment takes a three-layered structure which includes the humidifying modules 109a, 109c, for humidifying supplied air using exhaust air, between which the humidifying module 109b is disposed in parallel to both former modules for humidifying supplied air using exhaust hydrogen, no limitation is intended to such a structure and a two-layered structure may be employed wherein only one humidifying module is provided for humidifying supplied air using exhaust air, or an alternative structure may include more number of humidifying modules.

## Claims

1. A fuel cell system comprising:
a fuel cell (1) having a fuel electrode (1a) and an air electrode (1b);
an air supply section (3) supplying air to the air electrode (1b);
an air supply passage (21) connecting the air supply section (3) and the air electrode (1 b);
an air exhaust passage (23) expelling the air from the air electrode (1 b);
a fuel gas supply section (2) supplying fuel gas to the fuel electrode (1a);
a fuel gas supply passage (22) connecting the fuel gas supply section (2) and the fuel electrode (1 a);
a fuel gas exhaust passage (24) expelling the fuel gas from the fuel electrode (1a);
a first steam permeating humidifier (11) disposed between the fuel gas exhaust passage (24) and the air supply passage (21) to transfer moisture, present in the fuel gas exhaust passage (24), to the air in the air supply passage (21); and
a second steam permeating humidifier (12) disposed in the air exhaust passage (23), **characterized in that**
the second steam permeating humidifier (12) disposed between the air exhaust passage (23) and the air supply passage (21) to transfer moisture, present in the air exhaust passage (23), to the air in the air supply passage (21).

2. A fuel cell system according to claim 1, **characterized in that** the second steam permeating humidifier (12) is disposed upstream of the first steam permeating humidifier (11) with respect to the air supply passage (21).

3. A fuel cell system according to claim 1, **characterized in that** the second steam permeating humidifier (12) is disposed downstream of the first steam permeating humidifier (11) with respect to the air supply passage (21).

4. A fuel cell system according to any of claims 1 to 3, **characterized by** a bypass passage (28) disposed in the air supply passage (21) to bypass the second steam permeating humidifier (12); and
a valve (9) adjusting the flow rate of the air to be admitted to the bypass passage (28).

5. A fuel cell system according to any of claims 1 to 4, **characterized by** a bypass passage (29) disposed in the air exhaust passage (23) to bypass the second steam permeating humidifier (12); and
a valve (10) adjusting the flow rate of the air to be admitted to the bypass passage (29).

6. A fuel cell system according to any of claims 1 to 5, **characterized in that** the second steam permeating humidifier (12) is disposed in parallel with the first steam permeating humidifier (11) with respect to the air supply passage (21), and the first steam permeating humidifier (11) and the second steam permeating humidifier (12) form an integrated steam permeating humidifier (13) that is integrally formed in a common housing (101 B).

7. A fuel cell system according to claim 6, **characterized in that** the integrated steam permeating humidifier (13) includes a plurality of hollow fiber membrane modules (109a, 109b, 109c) in each of which a plurality of hollow fiber membranes (107a) are accommodated to allow the moisture to be supplied from the fuel gas and the air, passing inside the plurality of hollow fiber membranes, to the air passing outside the plurality of hollow fiber membranes to humidify the air.

8. A fuel cell system according to any of claims 1 to 7, **characterized in that** the first steam permeating humidifier (11) includes a hollow fiber membrane module (109) in which a plurality of hollow fiber membranes (107a) are accommodated to allow the moisture to be supplied from the fuel gas, passing inside or outside the plurality of hollow fiber membranes, to the air passing outside or inside the plurality of hollow fiber membranes to humidify the air, respectively.

9. A fuel cell system according to any of claims 1 to 8, **characterized in that** the second steam permeating humidifier (12) includes a hollow fiber membrane module (109A) in which a plurality of hollow fiber membranes (107a) are accommodated to allow the moisture to be supplied from the air, passing inside or outside the plurality of hollow fiber membranes, to the air passing outside or inside the plurality of hollow fiber membranes to humidify the air, respectively.

10. A fuel cell system according to any of claims 1 to 9, **characterized by** a fuel gas recirculation path (25) returning the fuel gas in the fuel gas exhaust passage (24) to the fuel gas supply passage (22); and
a recirculation unit (5, 6) recirculating the fuel gas to the fuel gas supply passage (22) via the fuel gas recirculation path (25).

11. A fuel cell system according to claim 10, **characterized in that** the recirculation unit includes an ejector (5).

12. A fuel cell system according to claim 10, **characterized in that** the recirculation unit includes a pump (6).

13. A method of humidifying a fuel cell system provided with a fuel cell (1) including a fuel electrode (1a) and and air electrode (1b), an air supply section (3) supplying air to the air electrode (1 b), an air supply passage (21) connecting the air supply section (3) and the air electrode (1 b), an air exhaust passage (23) expelling the air from the air electrode (1b), a fuel gas supply section (2) supplying fuel gas to the fuel electrode (1 a), a fuel gas supply passage (22) connecting the fuel gas supply section (2) and the fuel electrode (1a), and a fuel gas exhaust passage (24) expelling the fuel gas from the fuel electrode (1a), the method comprising:
transferring moisture, present in a fuel gas exhaust passage (24), to air in an air supply passage (21) and humidifying the air,
**characterized by**
transferring moisture, present in the air exhaust passage (23), to the air in the air supply passage (21).

## Patentansprüche

1. Brennstoffzellensystem, aufweisend:
eine Brennstoffzelle (1), die eine Brennelektrode (1a) und eine Luftelektrode (1 b) hat;
einen Luftzuführungsabschnitt (3), der Luft zu der Luftelektrode (1 b) zuführt;
einen Luftzuführungskanal (21), der den Luftzuführungsabschnitt (3) und die Luftelektrode (1 b) verbindet;
einen Luftauslasskanal (23), der die Luft von der Luftelektrode (1 b) ausstößt;
einen Brenngaszuführungsabschnitt (2), der Brenngas zu der Brennelektrode (1 a) zuführt;
einen Brenngaszuführungskanal (22), der den Brenngaszuführungsabschnitt (2) und die Brennelektrode (1a) verbindet;
einen Brenngasauslasskanal (24), der das Brenngas von der Brennelektrode (1a) ausstößt;
einen ersten Dampfdurchdringungsbefeuchter (11), angeordnet zwischen dem Brenngasauslasskanal (24) und dem Luftzuführungskanal (21), um Feuchtigkeit,
vorhanden in dem Brenngasauslasskanal (24), in den Luftzuführungskanal (21) zu übertragen; und
einen zweiten Dampfdurchdringungsbefeuchter (12), angeordnet in dem Luftauslasskanal (23), **dadurch gekennzeichnet, dass**
der zweite Dampfdurchdringungsbefeuchter (12), angeordnet ist zwischen dem Luftauslasskanal (23) und dem Luftzuführungskanal (21), um Feuchtigkeit, vorhanden in dem Luftauslasskanal (23), in die Luft in dem Luftzuführungskanal (21) zu übertragen.

2. Brennstoffzellensystem nach Anspruch 1, **dadurch gekennzeichnet, dass** der zweite Dampfdurchdringungsbefeuchter (12) stromauf des ersten Dampfdurchdringungsbefeuchters (11) in Bezug auf den Luftzuführungskanal (21) angeordnet ist.

3. Brennstoffzellensystem nach Anspruch 1, **dadurch gekennzeichnet, dass** der zweite Dampfdurchdringungsbefeuchter (12) stromab des ersten
Dampfdurchdringungsbefeuchters (11) in Bezug auf den Luftzuführungskanal (21) angeordnet ist.

4. Brennstoffzellensystem nach einem der Ansprüche 1 bis 3, **gekennzeichnet durch** einen Bypasskanal (28), angeordnet in dem Luftzuführungskanal (21), um den zweiten Dampfdurchdringungsbefeuchter (12) zu umgehen; und
ein Ventil (9), das die Strömungsrate der Luft, die in den Bypasskanal (28) zugeführt wird, einstellt.

5. Brennstoffzellensystem nach einem der Ansprüche 1 bis 4, **gekennzeichnet durch** einen Bypasskanal (29), angeordnet in dem Luftauslasskanal (23), um den zweiten Dampfdurchdringungsbefeuchter (12) zu umgehen; und
ein Ventil (10), das die Strömungsrate der Luft, die in den Bypasskanal (29) zugeführt wird, einstellt.

6. Brennstoffzellensystem nach einem der Ansprüche 1 bis 5, **dadurch gekennzeichnet, dass** der zweite Dampfdurchdringungsbefeuchter (12) parallel mit dem ersten Dampfdurchdringungsbefeuchter (11) in Bezug auf den Luftzuführungskanal (21) angeordnet ist, und der erste Dampfdurchdringungsbefeuchter (11) und der zweite Dampfdurchdringungsbefeuchter (12) einen integrierten Dampfdurchdringungsbefeuchter (13) bilden, der in einem gemeinsamen Gehäuse (101 B) einstückig gebildet ist.

7. Brennstoffzellensystem nach Anspruch 6, **dadurch gekennzeichnet, dass** der integrierte Dampfdurchdringungsbefeuchter (13) eine Mehrzahl von hohlen Fasermembranmodulen (109a, 109b, 109c) enthält, wobei in jedem von diesen eine Mehrzahl von hohlen Fasermembranen (107a) untergebracht ist, um der Feuchtigkeit, die von dem Brenngas und der Luft, die im Inneren der Mehrzahl der hohlen Fasermembranen hindurchströmen, zugeführt wird, zu gestatten, auf die Luft, die außerhalb der Mehrzahl von hohlen Fasermembranen vorbeiströmt, übertragen zu werden, um die Luft zu befeuchten.

8. Brennstoffzellensystem nach einem der Ansprüche 1 bis 7, **dadurch gekennzeichnet, dass** der erste Dampfdurchdringungsbefeuchter (11) ein hohles Filtermembranmodul (109) enthält, in dem eine Mehrzahl von hohlen Fasermembranen (107a) untergebracht ist, um der Feuchtigkeit, die aus dem Brenngas, das innerhalb oder außerhalb der Mehrzahl von hohlen Fasermembranen strömt, zu gestatten, auf die Luft, jeweils außerhalb oder innerhalb der Mehrzahl von hohlen Fasermembranen strömt, zugeführt zu werden, um die Luft zu befeuchten.

9. Brennstoffzellensystem nach einem der Ansprüche 1 bis 8, **dadurch gekennzeichnet, dass** der zweite Dampfdurchdringungsbefeuchter (12) ein hohles Filtermembranmodul (109A) enthält, in dem eine Mehrzahl von hohlen Fasermembranen (107a) untergebracht ist, um der Feuchtigkeit zu gestatten, aus der Luft, die innerhalb oder außerhalb der Mehrzahl von hohlen Fasermembranen vorbei strömt, in die Luft, jeweils außerhalb oder innerhalb der Mehrzahl von hohlen Fasermembranen strömt, zugeführt zu werden, um die Luft zu befeuchten.

10. Brennstoffzellensystem nach einem der Ansprüche 1 bis 9, **gekennzeichnet durch** einen Brenngasrückführungspfad (25), der das Brenngas in dem Brenngasauslasskanal (24) zu dem Brenngaszuführungskanal (22) zurückführt; und eine Rückführungseinheit (5, 6), der das Brenngas in den Brenngaszuführungskanal (22) über den Brenngasrückführungspfad (25)zurückführt.

11. Brennstoffzellensystem nach Anspruch 10, **dadurch gekennzeichnet, dass** die Rückführungseinheit einen Einspritzer (5) enthält.

12. Brennstoffzellensystem nach Anspruch 10, **dadurch gekennzeichnet, dass** die Rückführungseinheit eine Pumpe (6) enthält.

13. Verfahren zum Befeuchten eines Brennstoffzellensystems, versehen mit einer Brennstoffzelle (1), enthaltend eine Brennelektrode (1a) und eine Luftelektrode (1 b), einen Luftzuführungskanal (21), der den Luftzuführungsabschnitt (3) und die Elektrode (1b) verbindet, einen Luftauslasskanal (23), der die Luft von der Luftelektrode (1b) ausstößt, einen Brenngaszuführungsabschnitt (2), der Brenngas zu der Brennelektrode (1a) zuführt, einen Brenngaszuführungskanal (22), der den Brenngaszuführungsabschnitt (2) und die Brennelektrode (1 a) verbindet, einen Brenngasauslasskanal (24), der das Brenngas von der Brennelektrode (1a) ausstößt, wobei das Verfahren aufweist:
Übertragen von Feuchtigkeit, vorhanden in dem Brenngasauslasskanal (24), in die Luft in einem Luftzuführungskanal (21) und Befeuchten der Luft,
**gekennzeichnet durch**
Übertragen von Feuchtigkeit, vorhanden in dem Luftauslasskanal (23), in die Luft in dem Luftzuführungskanal (21).

## Revendications

1. Système de pile à combustible comprenant :
une pile à combustible (1) possédant une électrode à combustible (1a) et une électrode à air (1b) ;
une section de fourniture d'air (3) fournissant de l'air à l'électrode à air (1b) ;
un passage de fourniture d'air (21) reliant la section de fourniture d'air (3) et l'électrode à air (1b) ;
un passage d'échappement d'air (23) expulsant l'air de l'électrode à air (1b) ;
une section de fourniture de combustible gazeux (2) fournissant un combustible gazeux à l'électrode à combustible (1a) ;
un passage de fourniture de combustible gazeux (22) reliant la section de fourniture de combustible gazeux (2) et l'électrode à combustible (1a) ;
un passage d'échappement de combustible gazeux (24) expulsant le combustible gazeux de l'électrode à combustible (1a) ;
un premier humidificateur à imprégnation de vapeur (11) disposé entre le passage d'échappement de combustible gazeux (24) et le passage de fourniture d'air (21) pour transférer l'humidité présente dans le passage d'échappement de combustible gazeux (24) vers l'air du passage de fourniture d'air (21) ; et
un second humidificateur à imprégnation de vapeur (12) disposé dans le passage d'échappement d'air (23), **caractérisé en ce que**
le second humidificateur à imprégnation de vapeur (12) est disposé entre le passage d'échappement d'air (23) et le passage de fourniture d'air (21) pour transférer l'humidité présente dans le passage d'échappement d'air (23) vers l'air du passage de fourniture d'air (21).

2. Système de pile à combustible selon la revendication 1, **caractérisé en ce que** le second humidificateur à imprégnation de vapeur (12) est disposé en amont du premier humidificateur à imprégnation de vapeur (11) par rapport au passage de fourniture d'air (21).

3. Système de pile à combustible selon la revendication 1, **caractérisé en ce que** le second humidificateur à imprégnation de vapeur (12) est disposé en aval du premier humidificateur à imprégnation de vapeur (11) par rapport au passage de fourniture d'air (21).

4. Système de pile à combustible selon l'une quelconque des revendications 1 à 3, **caractérisé par** un passage de contournement (28) disposé dans le passage de fourniture d'air (21) pour contourner le second humidificateur à imprégnation de vapeur (12) ; et
une vanne (9) réglant le débit d'air à admettre vers le passage de contournement (28).

5. Système de pile à combustible selon l'une quelconque des revendications 1 à 4, **caractérisé par** un passage de contournement (29) disposé dans le passage d'échappement d'air (23) pour contourner le second humidificateur à imprégnation de vapeur (12) ; et
une vanne (10) réglant le débit de l'air à admettre vers le passage de contournement (29).

6. Système de pile à combustible selon l'une quelconque des revendications 1 à 5, **caractérisé en ce que** le second humidificateur à imprégnation de vapeur (12) est disposé en parallèle avec le premier humidificateur à imprégnation de vapeur (11) par rapport au passage de fourniture d'air (21), et le premier humidificateur à imprégnation de vapeur (11) et le second humidificateur à imprégnation de vapeur (12) forment un humidificateur à imprégnation de vapeur intégré (13) formé de manière intégrée dans un logement commun (101B).

7. Système de pile à combustible selon la revendication 6, **caractérisé en ce que** l'humidificateur à imprégnation de vapeur intégré (13) comporte une pluralité de modules de membranes à fibres creuses (109a, 109b, 109c) dans chacun desquels sont reçues une pluralité de membranes à fibres creuses (107a) pour permettre à l'humidité d'être fournie par le combustible gazeux et l'air, passant à l'intérieur de la pluralité de membranes à fibres creuses, vers le passage d'air à l'extérieur de la pluralité de membranes à fibres creuses pour humidifier l'air.

8. Système de pile à combustible selon l'une quelconque des revendications 1 à 7, **caractérisé en ce que** le premier humidificateur à imprégnation de vapeur (11) comporte un module de membrane à fibres creuses (109) dans lequel sont reçues une pluralité de membranes à fibres creuses (107a) pour permettre à l'humidité d'être fournie par le combustible gazeux, passant à l'intérieur ou à l'extérieur de la pluralité de membranes à fibres creuses, respectivement vers le passage d'air à l'extérieur ou à l'intérieur de la pluralité de membranes à fibres creuses pour humidifier l'air.

9. Système de pile à combustible selon l'une quelconque des revendications 1 à 8, **caractérisé en ce que** le second humidificateur à imprégnation de vapeur (12) comporte un module de membranes à fibres creuses (109A) dans lequel sont reçues une pluralité de membranes à fibres creuses (107a) pour permettre à l'humidité d'être fournie par l'air, passant à l'intérieur ou à l'extérieur de la pluralité the membrane à fibres creuses, vers l'air passant respectivement à l'extérieur ou à l'intérieur de la pluralité de membrane à fibres creuses pour humidifier l'air.

10. Système de pile à combustible selon l'une quelconque des revendications 1 à 9, **caractérisé par** un chemin de recyclage de combustible gazeux (25) ramenant le combustible gazeux du passage d'échappement de combustible gazeux (24) vers le passage de fourniture de combustible gazeux (22) ; et
une unité de recyclage (5, 6) recyclant le combustible gazeux vers le passage de fourniture de combustible gazeux (22) par l'intermédiaire du chemin de recyclage de combustible gazeux (25).

11. Système de pile à combustible selon la revendication 10, **caractérisé en ce que** l'unité de recyclage comporte un éjecteur (5).

12. Système de pile à combustible selon la revendication 10, **caractérisé en ce que** l'unité de recyclage comporte une pompe (6).

13. Procédé d'humidification d'un système de pile à combustible muni d'une pile à combustible (1) incluant une électrode à combustible (1a) et une électrode à air (1b), une section de fourniture d'air (3) fournissant de l'air à l'électrode à air (1b), un passage de fourniture d'air (21) reliant la section de fourniture d'air (3) et l'électrode à air (1b), un passage d'échappement d'air (23) expulsant l'air de l'électrode à air (1b), une section de fourniture de combustible gazeux (2) fournissant un combustible gazeux à l'électrode à combustible (la), un passage de fourniture de combustible gazeux (22) reliant la section de fourniture de combustible gazeux (2) et l'électrode à combustible (1a) et un passage d'échappement de combustible gazeux (24) expulsant le combustible gazeux de l'électrode à combustible (la), le procédé comprenant :
le transfert de l'humidité présente dans le passage d'échappement de combustible gazeux (24) vers l'air du passage de fourniture d'air (21) et l'humidification de l'air,
**caractérisé par**
le transfert de l'humidité présente dans le passage d'échappement d'air (23) vers l'air du passage de fourniture d'air (21).
